# EUROPEAN PATENT SPECIFICATION

(11) **EP 2 589 460 B1**
(45) Date of publication and mention of the grant of the patent: **25.06.2014**
(21) Application number: 13153764.9
(22) Date of filing: 15.12.2006
(51) Int. Cl.: B23K 35/30, C22C 19/05, C22C 19/07, C22C 30/00

(54) **Braze alloy compositions**
Hartlötlegierungszusammensetzungen
Compositions d'alliage de brasage

(30) Priority: 15.12.2005 US 300394
(43) Date of publication of application: 08.05.2013
(62) Divisional of application: 06126201.0
(73) Proprietor: General Electric Company, Schenectady, New York 12345 (US)
(72) Inventor: Jiang, Liang, Schenectady, NY New York 12303 (US); Cretegny, Laurent, Niskayuna, NY New York 12309 (US); Miglietti, Warren, Greenville, SC South Carolina 29609 (US)
(74) Representative: Szary, Anne Catherine

(56) References cited:
- EP-A- 0 351 948
- EP-A- 1 258 545
- EP-A1- 0 353 843
- EP-A1- 0 457 503
- WO-A-03/025237
- WO-A-2005/054528
- WO-A1-02/098600
- JP-A- 62 093 333
- JP-A- 2000 042 755
- US-A- 3 820 961

## Description

### BACKGROUND OF THE INVENTION

This invention generally relates to nickel-based braze alloy compositions.

The cobalt-based braze alloys disclosed herein do not fall part of the invention.

In order to function effectively in a high-temperature environment, heavy alloy components are typically added to strengthen a superalloy. This may result in difficulties for welding joining/repair of superalloy components used in an extreme environment, such as a hot-gas-path airfoil in a gas turbine. Brazing is becoming a more preferred choice for joining/repair of superalloy components as a result of its reduced cost and cycle time. However, it can be challenging to make the braze joints/repair to have certain properties - especially ductility - approaching that of the superalloy substrate material. Generally, a primary obstacle can be the formation of brittle phases in the brazed joint.

Boron has been used extensively in brazing alloys, but brittle borides typically result in poor mechanical properties of the braze joint. A process to improve the mechanical integrity of the braze joint/repaired area generally requires the use of a prolonged diffusion cycle. This approach may reduce the amount of brittle boride phases by homogenization with substrate superalloys or braze powder mixture. This process, however, may require a prolonged cycle time, increasing cost and subjecting the substrate superalloy to thermal degradation.

Braze alloy compositions - and related processes and articles - are described in U.S. Patent No. 4,414,178 to Smith et al.; U.S. Patent No. 5,240,491 to Budinger et al.; U.S. Patent No. 5,735,448 to Draghi et al.; U.S. Patent No. 5,783,318 to Biondo et al.; U.S. Patent No. 6,503,349 to Pietruska et al.; U.S. Patent No. 6,520,401 to Miglietti; U.S. Patent No. 6,530,971 to Cohen et al.; U.S. Patent No. 6,165,290 to Rabinkin; and U.S. Patent App. Pub. No. 20050067061 to Huang et al. Where hafnium is present in a low-weight percentage, it generally acts as a grain boundary strengthener - not as a reducer of the braze alloy composition's melting point.

JP-A-62093333 discloses a high strength and high ductility Ni alloy having high oxidation resistance and made chiefly on an L1₂ type intermetallic compound having a composition consisting of Al, B, Fe, Cr, Hf, Zr and Ni. The composition consisting of, in weight %, 5-9.5 Al, ≤3% B, 1-12% Fe, 0.01-25% Cr, 0.005-22% Hf and/or 0.005-4% Zr and the balance Ni with incidental impurities.

JP 2000042755 discloses welding faces of a Ni base alloy high in Al content butted to each other through an inset material which contains, by weight, 1-18% Cr, 1-5% B, 0.01-5% Ce, 0-11% Zr, 0-22% Hf, 0-11% Nb and 0-22% Ta.

WO 03/025237 discloses a composition comprising Ni and the following additional components in % by weight (i) Co 4.5 to 11%; (ii) Cr 7 to 12%; (iii) Mo 0.5 to 1.4%; (iv) W 1.8 to 4.5%; (v) Re 1.0 to2.6%; (vi) Al 2.4 to 5.6%; (vii) Ta 2.4 to 5.9%; (viii) Hf 0.4% to 6.0%; (ix) C up to about 0.1 %; (x) B 0.2 to 2.2%; (xi) Zr up to 0.02%; (xii) Fe 0.07 to 0.2%; and (xiii) Mn 0.03 to 0.1 %. The composition is particularly suited for braze repair of alloy materials e.g. superalloys in particular single crystal or directly solidified alloys such as those used in the manufacture of turbine engines of aircraft etc..

EP 1258545 discloses a method for isothermal brazing of single crystal components to provide a homogeneous γγ¹ - microstructure of the brazed joint with mechanical properties similar to those of the braze material.

### BRIEF DESCRIPTION OF THE INVENTION

Two exemplary embodiments of braze alloy compositions will be discussed. One exemplary embodiment relates to a nickel-based high-temperature braze alloy composition consisting of chromium (Cr), hafnium (Hf), boron (B) and nickel (Ni). Another exemplary embodiment relates to a cobalt-based high-temperature braze alloy composition comprising Cr, Hf, and B.

The nickel-based braze alloy composition consists of: 9-25% chromium by weight, and all subranges therebetween; 5-45% hafnium by weight, and all subranges therebetween; 0.05-6% boron by weight, and all subranges therebetween; balance nickel; wherein the alloy has a solidus temperature less than 1191°C (2175°F).

In another embodiment, a cobalt-based braze alloy composition comprises: 9-25% chromium by weight, and all subranges therebetween; 5-56% hafnium by weight, and all subranges therebetween; and 0.05-6% boron by weight, and all subranges therebetween.

### BRIEF DESCRIPTION OF THE DRAWINGS

Embodiments will now be described, by way of example only, with reference to the accompanying drawings, in which:
FIGURE 1 illustrates typical microstructures for nickel-based braze alloys; and
FIGURE 2 illustrates typical microstructures for cobalt-based braze alloys.

### DETAILED DESCRIPTION OF THE INVENTION

The braze alloy composition may be used as a single homogenous braze. Alternatively, the braze alloy composition may be used as a component in, for example, a wide-gap braze mixture where higher or lower melting point superalloy and/or braze powder is used. These braze alloy compositions may permit, for example, joining or repairing of superalloy articles with complex shapes and high temperature applications. Furthermore, the braze alloy compositions may provide for enhanced ductility.

In general terms, the boron and hafnium are coupled to suppress the solidus temperature, and the chromium, hafnium, and boron are coupled to suppress the liquidus temperature. In addition, the added chromium may provide, for example, oxidation and corrosion resistance of the brazing alloy. A boron-, chromium-, and hafnium-containing intermetallic compound may be more ductile than chromium-, tungsten-, and nickel-containing borides.

The braze alloy compositions disclosed and claimed herein may permit brazing at high temperatures without degrading the superalloy substrate, may reduce the brittleness of the borides or intermetallic compounds formed during the brazing process, and may improve the mechanical properties (including, for example, ductility) of the braze joint.

In accordance with the invention, the nickel-based braze alloy composition consists of: 9-25% chromium by weight, and all subranges therebetween; 5-45% hafnium by weight, and all subranges therebetween; 0.05-6% boron by weight, and all subranges therebetween; balance nickel; wherein the alloy has a solidus temperature less than 1191°C (2175°F).

In accordance with one exemplary embodiment of the invention, the chromium is preferably 9-15% by weight. More preferably, the chromium is 13% by weight. Preferably, the hafnium is 10-30% by weight. More preferably, the hafnium is 15-25% by weight. Even more preferably, the hafnium is 15%, 20%, or 25% by weight. Preferably, the boron is 0.05-3.6% by weight. More preferably, the boron is 1% by weight.

The nickel-based braze alloy composition has a solidus temperature less than 1191°C (2175 °F). More preferably, the nickel-based braze alloy composition has a solidus temperature less than 1149°C (2100 °F). Even more preferably, the nickel-based alloy composition has a solidus temperature less than 1107°C (2025 °F).

In accordance with the invention, the nickel-based braze alloy composition consists of 9-25% chromium by weight; 5-45% hafnium by weight; 0.05-6% boron by weight; and nickel. More preferably, the nickel-based braze alloy composition consists of 9-25% chromium by weight; 10-30% hafnium by weight; 0.05-3.6% boron by weight; and nickel.

In accordance with another exemplary embodiment, a cobalt-based braze alloy composition comprises: 9-25% chromium by weight, and all subranges therebetween; 5-56% hafnium by weight, and all subranges therebetween; and 0.05-6% boron by weight, and all subranges therebetween.

In accordance with another exemplary embodiment, the chromium is 15-25% by weight. More preferably, the chromium is 20% by weight. Preferably, the hafnium is 10-30% by weight. More preferably, the hafnium is 10-26% by weight. Even more preferably, the hafnium is 15%, 20%, or 25% by weight. Preferably, the boron is 0.05-4% by weight. More preferably, the boron is 1% by weight.

In accordance with another exemplary embodiment, the cobalt-based braze alloy composition has a solidus temperature less than 1191°C (2175 °F). More preferably, the cobalt-based braze alloy composition has a solidus temperature less than 1149°C (2100 °F). Even more preferably, the cobalt-based alloy composition has a solidus temperature less than 1107°C (2025 °F).

In accordance with another exemplary embodiment, the cobalt-based braze alloy composition consists of 9-25% chromium by weight; 5-56% hafnium by weight; and 0.05-6% boron by weight; and cobalt. More preferably, the cobalt-based braze alloy composition consists of 9-25% chromium by weight; 10-26% hafnium by weight; 0.05-4% boron by weight; and cobalt.

In accordance with another exemplary embodiment, a portion of the residual cobalt in the cobalt-based braze alloy composition is substituted with at least one element commonly found in superalloys, such as, for example, aluminum, titanium, molybdenum, tungsten, nickel, iron, zirconium, niobium, rhenium, carbon, and silicon. Preferably, up to 60% of the residual cobalt is substituted with at least one element commonly found in superalloys. More preferably, up to 50% of the residual cobalt is substituted with at least one element commonly found in superalloys.

A person of ordinary skill in the art should understand and recognize that all disclosed and claimed percentages are approximate.

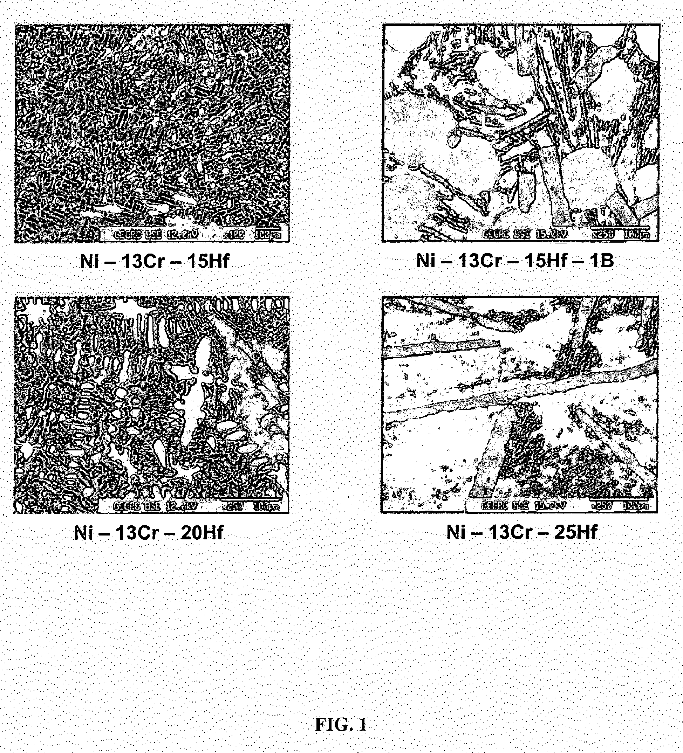

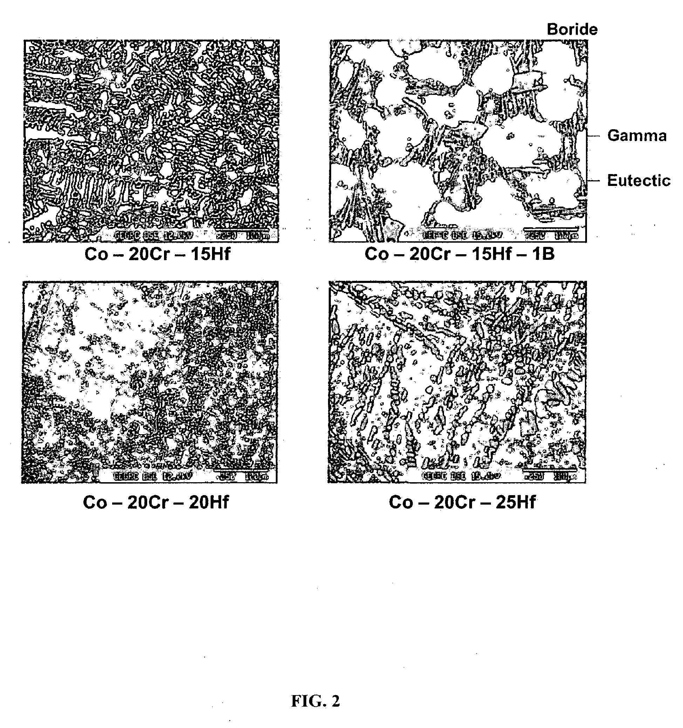

Fig. 1 depicts four nickel-based braze alloy compositions. Fig. 2 depicts four cobalt-based braze alloy compositions.

The following table (Table 1) shows hardness measurements for different phases in certain braze alloy compositions:

| | Micro Hardness (HV) | | | | | |
|---|---|---|---|---|---|---|
| | Gamma | | Eutectic | | Boride | |
| Braze Alloy | Ave. | Std. Dev. | Ave. | Std. Dev. | Ave. | Std. Dev. |
| Ni-13Cr-15Hf-1B | 215 | 17 | 576 | 76 | N/A | N/A |
| Ni-13Cr-15Hf | 242 | 19 | 294 | 56 | / | / |
| Ni-13Cr-20Hf | 309 | 19 | 322 | 72 | / | / |
| Ni-13 Cr-25Hf | 398 | 32 | 324 | 30 | / | / |
| Ni-13Cr-25Hf-1B | 326 | 93 | 746 | 108 | 1150 | 240 |
| Co-20Cr-15Hf-1B | 433 | 18 | 917 | 53 | 1229 | 84 |
| Co-20Cr-15Hf | 477 | 46 | 658 | 89 | / | / |
| Co-20Cr-20Hf | 565 | 21 | 612 | 61 | / | / |
| Co-20Cr-25Hf | / | / | 1104 | 197 | / | / |
| Co-20Cr-25Hf-1B | 538 | 59 | | | N/A | N/A |

| | | | | | | |
|---|---|---|---|---|---|---|
| Table 1: Micro-Hardness Results of Hafnium-Containing Braze Alloys | | | | | | |

Table 1 exemplifies that boride is typically harder than a hafnium-bearing compound.

The following table (Table 2) shows melting point temperature measurements of certain braze alloy compositions:

| Braze Alloy | Solidus (°F), °C | Liquidus (°F), °C |
|---|---|---|
| Ni-13Cr-15Hf-1B | (2013), 1101 | (2352), 1289 |
| Ni-13Cr-15Hf | (2201), 1205 | (2438), 1287 |
| Ni-13Cr-20Hf | (2228), 1220 | (2380), 1304 |
| Ni-13Cr-25Hf | (2248), 1231 | (2355), 1291 |
| Ni-13Cr-25Hf-1B | (2010), 1099 | (2322), 1272 |
| Co-20Cr-15Hf-1B | (2008), 1098 | (2340), 1282 |
| Co-20Cr-15Hf | (2286), 1252 | (2493), 1367 |
| Co-20Cr-20Hf | (2324), 1273 | (2381), 1305 |
| Co-20Cr-25Hf | (2307), 1264 | (2408), 1320 |
| Co-20Cr-25Hf-1B | (2012), 1100 | (2205), 1207 |

| | | |
|---|---|---|
| Table 2: DSC Results of Hafnium-Containing Braze Alloys | | |

The temperatures in Table 2 are based on differential scanning calorimetry (DSC) heating curve analysis. Table 2 exemplifies that hafnium-containing braze alloys with boron may have beneficial properties.

## Claims

1. A nickel based braze alloy composition consisting of:
9-25% chromium by weight;
5-45% hafnium by weight;
0.05-6% boron by weight;
balance nickel;
wherein the alloy has a solidus temperature less than 1191°C (2175°F).

2. The nickel based braze alloy composition of claim 1 comprising 9-15% chromium by weight.

3. The nickel based braze alloy composition of claim 1 comprising 10-30% hafnium by weight.

4. The nickel based braze alloy composition of claim 1 comprising 0.05-3.6% boron by weight.

## Patentansprüche

1. Hartlötlegierungszusammensetzung auf Nickelbasis, bestehend aus:
9-25 Gew.-% Chrom;
5-45 Gew.-% Hafnium;
0,05-6 Gew.-% Bor;
Rest Nickel;
wobei die Legierung eine Solidustemperatur aufweist, die niedriger als 1191 °C ist.

2. Hartlötlegierungszusammensetzung auf Nickelbasis nach Anspruch 1, die 9-15 Gew.-% Chrom umfasst.

3. Hartlötlegierungszusammensetzung auf Nickelbasis nach Anspruch 1, die 10-30 Gew.-% Hafnium umfasst.

4. Hartlötlegierungszusammensetzung auf Nickelbasis nach Anspruch 1, die 0,05-3,6 Gew.-% Bor umfasst.

## Revendications

1. Composition d'alliage de brasage à base de nickel consistant en :
9 à 25 % en poids de chrome ;
5 à 45 % en poids d'hafnium ;
0,05 à 5 % en poids de bore ;
le reste de nickel ;
dans laquelle l'alliage a une température de solidus inférieure à 1 191 °C (2 175 °F).

2. Composition d'alliage de brasage à base de nickel selon la revendication 1, comprenant 9 à 15 % en poids de chrome.

3. Composition d'alliage de brasage à base de nickel selon la revendication 1, comprenant 10 à 30 % en poids d'hafnium.

4. Composition d'alliage de brasage à base de nickel selon la revendication 1, comprenant 0,05 à 3,6 % en poids de bore.
